(19) Europäisches Patentamt
European Patent Office
Office européen des brevets

(11) **EP 0 703 111 B1**

(12) **EUROPÄISCHE PATENTSCHRIFT**

(45) Veröffentlichungstag und Bekanntmachung des Hinweises auf die Patenterteilung:
**29.12.1997 Patentblatt 1997/52**

(51) Int. Cl.$^6$: **B60K 35/00**, B60R 16/02

(21) Anmeldenummer: **95114022.7**

(22) Anmeldetag: **07.09.1995**

(54) **Verfahren zur Anzeige von Informationen auf einem Bildschirm**

Method for the display of information on a screen

Procédé pour l'affichage d'informations sur un écran

(84) Benannte Vertragsstaaten:
**DE FR GB IT SE**

(30) Priorität: **23.09.1994 DE 4433953**

(43) Veröffentlichungstag der Anmeldung:
**27.03.1996 Patentblatt 1996/13**

(73) Patentinhaber: **ROBERT BOSCH GMBH**
**70442 Stuttgart (DE)**

(72) Erfinder:
• **Knoll, Peter, Prof. Dr.-Ing.**
**D-76275 Ettlingen (DE)**
• **König, Winfried, Dr. Dipl.-Ing.**
**D-76327 Pfinztal (DE)**
• **Heiland-Franzen, Christa, Dipl.-Ing.**
**D-76344 Eggenstein-Leopoldshafen (DE)**

(56) Entgegenhaltungen:
EP-A- 0 548 646          DE-A- 4 307 367
FR-A- 2 667 026

**Beschreibung**

Stand der Technik

Die Erfindung geht aus von einem Verfahren zur Anzeige von Informationen nach dem Oberbegriff des Hauptanspruchs. Es ist bekannt, in Kraftfahrzeugen Anzeigesysteme vorzusehen, die die zum Führen eines Kraftfahrzeugs erforderlichen und gegebenenfalls zusätzliche Informationen bereitstellen. Diese Anzeigesysteme sind in aller Regel im zentralen Blickfeld des Fahrzeugführers im Armaturenbrett angeordnet. Es ist beispielsweise in der DE 31 49 291 A1 vorgeschlagen worden, die erforderlichen und gegebenenfalls noch weitere, zusätzliche informative Einzelanzeigen in sogenannten Kombinationsanzeigevorrichtungen zusammenzufassen und diese dann im Armaturenbrett des Kraftfahrzeugs als Baueinheit einzubauen. Die Kombinationsanzeigevorrichtungen werden dabei von bekannten, an entsprechenden Stellen des Kraftfahrzeuges angeordneten Sensoren mit den notwendigen Daten versorgt, die bei modernen Kraftfahrzeugen gegebenenfalls unter Zwischenschaltung von Umsetzung oder Rechnersystemen bereitgestellt werden. Diese Einzelinformationen können beispielsweise die Fahrtgeschwindigkeit, die Motordrehzahl, die Öltemperatur, die Kühlmitteltemperatur usw. als notwendige Informationen und die Außen- und/oder Innentemperatur, die Sitzposition, der Schaltzustand verschiedener Zusatzeinrichtungen usw. als zusätzliche Informationen sein. Bei diesen Kombinationsanzeigevorrichtungen ist jedoch nachteilig, daß die Art und Weise der Darstellung der Einzelanzeigen fest vorgegeben ist, d.h., ob die Anzeige als Analog- oder Digitalanzeige, als Zeiger oder Balken, groß oder klein, nicht farbig oder farbig, in welcher Farbe, mit welcher Farbintensität, usw. ausgebildet ist.

In der DE-35 14 438 ist weiterhin bereits eine zentrale Bedienungsein- und Informationsausgabe zur Steuerung von mehreren in einem Fahrzeug eingebauten Zusatzgeräten vorgeschlagen worden, mit einer Anzeigeeinheit, deren Anzeige in Felder zur Darstellung von Informationen und Funktionsauswahltabellen untergliederbar ist, sowie mit Bedientasten, die den Elementen dargestellter Menüs eindeutig zugeordnet sind, wobei die Elemente der Menüs Funktionen angeben, die durch die jeweiligen Bedientasten anregbar sind und einzelne ein oder mehrere Zusatzgeräte bedienende Menüs über wenigstens ein auf der Anzeige darstellbares Grundmenü anwählbar sind, wobei zusätzliche Bedienelemente vorgesehen sind, mit denen ein direkter Zugriff zu bestimmten Grundfunktionen der zentralen Bedienungsein- und Informationsausgabe und der Zusatzgeräte jederzeit und unabhängig vom augenblicklich angewählten Menü gegeben ist. Auf der Anzeige ist wenigstens ein persönliches Menü darstellbar, das von einer Bedienperson individuell aus den Elementen aller Menüs selbst erstellt werden kann, wobei über das persönliche Menü die Gerätefunktionen ausgewählt werden können, die für die Bedienperson von besonderem Interesse sind. Bei dieser vorgeschlagenen Lösung kann zwar von der Bedienperson eine gewünschte Information ausgewählt und auf der Informationsausgabe dargestellt werden, jedoch ist es nicht möglich, gleichzeitig mehrere Informationen darzustellen und diese dann noch in unterschiedlicher, von der Bedienperson gewünschter Form wiederzugeben. Somit müssen beim Einsatz dieser zentralen Bedienungsein- und Informationsausgabe in jedem Falle wenigstens die zum Führen eines Kraftfahrzeugs notwendigen Einzelanzeigen zusätzlich zur Verfügung stehen.

Vorteile der Erfindung

Das erfindungsgemäße Verfahren mit den kennzeichnenden Merkmalen des Hauptanspruchs hat demgegenüber den Vorteil, daß in einem zentralen Blickfeld des Fahrzeugführers alle zum Führen des Kraftfahrzeugs notwendigen und darüber hinaus zusätzlich gewünschten Informationen in von der Bedienperson gewünschter Konfiguration und Form dargestellt werden, wobei aufgrund der Auswertung der Betätigungen der Bedientasten ein Maß für den Erfahrungsgrad der Bedienperson im Umgang mit dem Anzeigeverfahren erhalten wird und für die Darstellung der Informationen ausgewertet wird. Durch die Auswertung wird außerdem die Häufigkeitsverteilung der Betätigung der Bedientasten ermittelt, wodurch eine auf die Bedienperson abgestimmte Darstellung der Informationen und des Angebots erfolgt.

Durch die in den Unteransprüchen aufgeführten Maßnahmen sind vorteilhafte Weiterbildungen und Verbesserung des im Hauptanspruch angegebenen Verfahrens möglich.

Die Darstellung des Angebots in Form von Symbolen, Buchstaben oder Zahlen stellt einen Vorteil dar, da es der Bedienperson erleichtert wird, eine Auswahl ohne Zwischenschaltung eines vom Verkehrsgeschehen ablenkenden Denkprozesses zu treffen.

Die Darstellung von Zusatzinformationen als Bedienungshilfen bei einer niedrigen festgestellten Bediengeschwindigkeit ist insofern vorteilhaft, als davon ausgegangen werden kann, daß die Bedienperson noch sehr geringe Erfahrungen mit dem Auswahl- und Anzeigeverfahren hat und die Zusatzinformationen zu einer für die Verbesserung der Verkehrssicherheit gewünschten Erhöhung der Bedienungsgeschwindigkeit benötigt.

Es erweist sich ebenso als vorteilhaft, bei einer hohen festgestellten Bediengeschwindigkeit keine oder nur eine vereinfachte Darstellung des Angebots vorzusehen, da davon auszugehen ist, daß die Bedienperson bereits einen höheren Erfahrungsgrad besitzt und somit redundante Darstellungen überflüssig sind.

Ein weiteren Vorteil erhält man dadurch, daß das Angebot dergestalt geändert wird, daß Informationen oder Darstellungsformen, welche häufig ausgewählt werden, mit weniger Betätigungen von Bedientasten auswählbar sind, als seltener ausgewählte Informationen oder Darstellungsformen. Dadurch minimiert sich der Aufwand zur Darstellung der am häufigsten ausgewählten Informationen oder Darstellungsformen, und es wird der Tatsache Rechnung getragen, daß die auswählende Bedienperson auch zukünftig mit hoher Wahrscheinlichkeit die durch die hohe Häufigkeit gekennzeichnete Darstellung auswählen wird

Wenn das Angebot in Form eines Menüs mit mehreren Ebenen dargestellt wird, entsteht der Vorteil, daß eine übersichtlichere Anzeige des Angebots realisiert wird.

Das Anbieten der am häufigsten gewählten Informationen in der Hauptebene des Menüs bewirkt eine vereinfachte und schnellere Auswählbarkeit der am häufigsten gewählten Informationen.

Es erweist sich zudem als vorteilhaft, wenn wichtige Informationen immer, immer wieder in periodischen Zeitabständen oder unmittelbar bei Auftreten eines bestimmten Ereignisses angezeigt werden, da so die Sicherheit der im Fahrzeug befindlichen Bedienperson unabhängig von den ausgewählten Informationen durch Anzeige solcher wichtigen Informationen gewährleistet wird.

Durch das Zurückschalten von wichtigen Informationen auf die Anzeige anderer Informationen ist die Bedienperson nicht unnötigerweise gezwungen, die vor der Anzeige der wichtigen Information getroffenen Eingaben zu wiederholen.

Durch die Speicherung der Änderungen, welche durch die Auswertung vorgenommen werden, in einem Speichermittel wird der Vorteil erzielt, daß auch bei einem Stromausfall oder beim Abschalten des Fahrzeugs die vorher von der Bedienperson ausgewählten Einstellungen für die Anzeige wieder wunschgemäß angezeigt werden, ohne die gesamte Eingabeprozedur zu wiederholen.

Wenn die Änderungen zusammen mit einer Personenkennung im Speichermittel abgespeichert werden, kann eine direkte Zuordnung zur Bedienperson erfolgen, wodurch der Vorteil entsteht, daß bei wechselnden Bedienpersonen jeweils die zu der gerade die Anzeige benutzenden Bedienperson zugehörigen Informationen und Änderungen aus dem Speichermittel verwendet werden. Dadurch vereinfacht sich die Auswahl trotz Benutzung durch mehrere Bedienpersonen.

Zeichnung

Ein Ausführungsbeispiel der Erfindung ist in der Zeichnung dargestellt und in der nachfolgenden Beschreibung näher erläutert.
Es zeigen:

Figur 1    eine Anzeigevorrichtung,

Figur 2    ein Beispiel für ein Auswahlmenü,

Figur 3    ein Schaltbild für eine Auswerteeinheit,

Figur 4    ein Ablaufdiagramm.

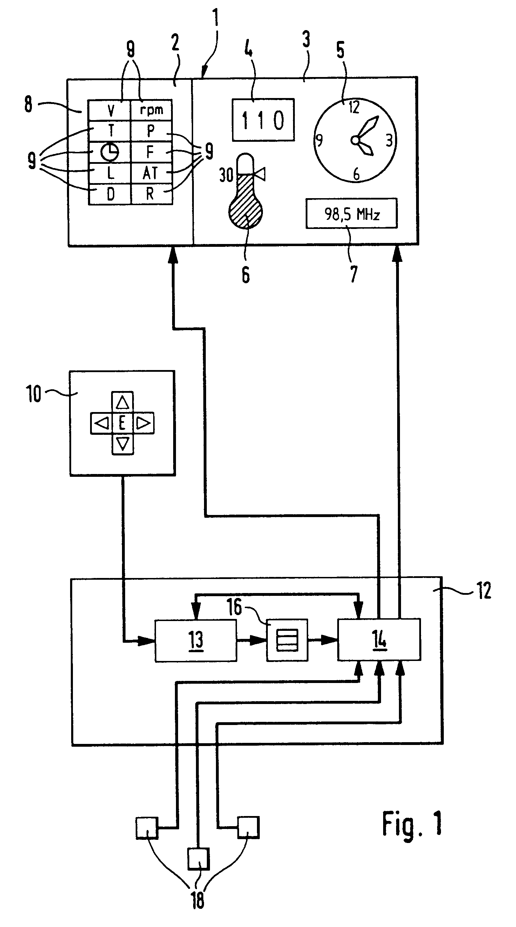

Die in Figur 1 gezeigte Anordnung umfaßt einen Bildschirm 1, der einen Auswahlbereich 2 und einen Anzeigebereich 3 umfaßt. Weiter vorgesehen ist eine Tastatur 10, die mit einer Datenverarbeitungsvorrichtung 12 verbunden ist. Die Datenverarbeitungsvorrichtung 12 umfaßt eine Auswerteeinheit 13, ein Speichermittel 16 und einen Anzeigerechner 14. Die Tastatur 10 ist mit dem Eingang der Auswerteeinheit 13 verbunden. Einem Eingang des Anzeigerechners 14 ist die Auswerteeinheit 13 unter Zwischenschaltung des Speichermittels 16 vorgeschaltet. Mehrere Sensoren 18 sind an weitere Eingänge des Anzeigerechners 14 angeschlossen. Aus dem Anzeigerechner 14 sind zwei Ausgänge herausgeführt, von denen einer zum Auswahlbereich 2 und einer zum Anzeigebereich 3 führt. Im Auswahlbereich 2 ist ein Angebot 8 dargestellt, welches Bedienfelder 9 umfaßt. Auf dem Anzeigebereich 3 ist eine Information 4 für die Anzeige der Geschwindigkeit, eine Information 5 für die Anzeige der Uhrzeit, eine Information 6 für die Anzeige der Temperatur und eine Information 7 für die Anzeige der eingestellten Radiofrequenz dargestellt. Die Auswerteeinheit 13 ist außerdem mit dem Anzeigerechner 14 verbunden.

Eine Bedienperson, bei der es sich üblicherweise um eine das Kraftfahrzeug lenkende Person handelt, betrachtet zum Ablesen der angezeigten kraftfahrzeugspezifischen Informationen den Bildschirm 1. Der Anzeigebereich 3 dient dabei ausschließlich der Anzeige der Informationen, während der Auswahlbereich 2 des Bildschirms 1 der Anzeige des Angebots 8 dient. Von dem Angebot 8 kann die Bedienperson mittels Bedienung der Tastatur 10 aus verschiedenen durch die Bedienfelder 9 repräsentierten Informationen auswählen, um so eine wunschgemäße Darstellung von ausgewählten Informationen auf dem Anzeigebereich 3 zu erhalten. Beispielhaft sind hier Informationen über Geschwindigkeit, Temperatur, Uhrzeit, Luftdruck, Fahrtrichtung, Drehzahl, Öldruck, Benzinstand, Außentemperatur und Radio auf dem Auswahlbereich 2 angezeigt. Bei Betätigung der Tastatur 10 gibt diese entsprechende Signale an die Auswerteeinheit 13 ab, die in der Auswerteeinheit 13 ausgewertet werden. Die Signale werden dabei anhand des gerade vom Anzeigerechner 14 dargestellten Angebots 8 ausgewertet, so daß bei der Auswertung eine eindeutige Zuordnung der Eingabe zu einer Information erfolgt. Von den Sensoren 18 gelieferte Informationen gelangen zum Anzeigerechner 14, der die Anzeige der Informationen der Sensoren 18 auf dem Anzeigebereich 3 des Bildschirms 1 steuert. Das Ergebnis der Auswertung in der Auswerteeinheit 13 gelangt über das Speichermittel 16 zum Anzeigerechner 14, wo dieses Ergebnis dazu dient, aus den vielen gelieferten Signalen der Sensoren 18 eine dem Ergebnis der Auswertung angepaßte Auswahl von Informationen zu treffen, die auf dem Anzeigebereich 3 angezeigt werden. Die Darstellungsform für die anzuzeigende Information, d.h. z.B. Größe, Farbe, Darstellungsparameter oder Darstellung in analoger oder digitaler Form wird dabei mittels des Anzeigerechners 14 erzeugt. Nach Anbietung von verschiedenen Darstellungsformen im Angebot 8 gibt die Bedienperson dazu die von ihr gewünschte Darstellungsform in die Tastatur 10 ein. Die Eingabe wird wiederum anhand des aktuell dargestellten Angebots 8, welches der Auswerteeinheit 13 vom Anzeigerechner 14 mitgeteilt wird, ausgewertet. Die entsprechende Auswahl einer Darstellungsform einer anzuzeigenden Information im Anzeigerechner 14 erfolgt dabei wiederum anhand des Ergebnisses einer Auswertung der Signale in der Auswerteeinheit 13, welche nach der Eingabe von der Tastatur 10 an die Auswerteeinheit 13 gelangen. Zusätzlich steuert der Anzeigerechner 14 die Darstellung des Angebots 8 auf dem Auswahlbereich 2. Dieses Angebot 8 ist beispielsweise in Form eines Menüs dargestellt, welches mehrere Ebenen aufweist, die in Abhängigkeit von der Eingabe auf der Tastatur 10 dargestellt werden. Dazu gelangen aus der Auswerteeinheit 13 entsprechende Signale zum Anzeigerechner 14, die dem Anzeigerechner 14 mitteilen, welche Eingabe gerade erkannt wurde.

In der Auswerteeinheit 13 wird der zeitliche Abstand zwischen den Betätigungen der Bedientasten gemessen, so daß ein Maß für die Bediengeschwindigkeit erhalten wird. Außerdem wird in der Auswerteeinheit 13 registriert, welche der angebotenen Informationen bzw. Darstellungsformen die Bedienperson bevorzugt auswählt. Die erhaltenen Daten über Bediengeschwindigkeit und bevorzugte Informationen bzw. Darstellungsformen gelangen zur Zwischenspeicherung in das Speichermittel 16. Aus dem Speichermittel 16 gelangen diese Daten wiederum zum Anzeigerechner 14. Im Anzeigerechner 14 erfolgt nun eine Anpassung der Anzeige der Informationen und ihrer Darstellungsformen an die Wünsche der Bedienperson.

Dazu wird davon ausgegangen, daß die Bedienperson bei einer hohen Bediengeschwindigkeit eine entsprechend große Routine und Erfahrung im Umgang mit der Anzeigevorrichtung hat. Umgekehrt wird davon ausgegangen, daß bei einer niedrigen Bediengeschwindigkeit die Bedienperson noch Schwierigkeiten im Umgang mit der Anzeigevorrichtung hat und daher noch zusätzliche Auswahlhilfen zum besseren Erlernen des Umgangs mit der Anzeigevorrichtung und dem Anzeigeverfahren benötigt. Dementsprechend werden aus dem Anzeigerechner 14, zusätzlich zu dem in den Bedienfeldern 9 bisher dargebotenen Angebot, Zusatzinformationen an den Auswahlbereich 2 gesendet und dort dargestellt, um eine Auswahlhilfe für die Bedienperson zu bieten. Beispielsweise können zu den Kürzeln "V" oder "T" für einen solche Bedienperson die besser verständlichen Begriffe "Geschwindigkeit" oder "Temperatur" als Zusatzinformationen angezeigt werden.

Umgekehrt können bei einer hohen Bediengeschwindigkeit dagegen redundante Teile des Angebots mittels des Anzeigerechners 14 vom Auswahlbereich 2 weggenommen werden, da davon ausgegangen werden kann, daß die Bedienperson genügend Erfahrung besitzt, um auch mit einer reduzierten Angebotsdarstellung klare Auswahlen treffen zu können und auch nicht mit redundanten Zusatzinformationen belästigt werden will.

Außerdem ist es vorgesehen, daß eine Anpassung des Angebots 8 dergestalt erfolgt, daß die am häufigsten ausgewählten Informationen bzw. Darstellungsformen so im Angebot 8 dargestellt werden, daß deren Auswahl von der Bedienperson mit weniger Betätigungen der Tastatur 10 erreichbar ist, als vergleichsweise seltener ausgewählte Informationen bzw. Darstellungsformen, d.h. ein Menü mit mehreren Ebenen wird so aufgebaut, daß mit steigender Häufigkeit auch das Niveau der Ebene in Bezug auf die Hauptebene steigt. Dies dient dazu, daß die Bedienperson mit so wenig Betätigungen wie möglich die gewünschten Informationen auswählen oder deren Darstellungsform ändern kann, wenn sie gerade nicht oder in einer anderen Darstellungsform auf dem Anzeigebereich 3 dargestellt wird.

Dieses Verfahren kann vor allem auch dafür verwendet werden, daß die am häufigsten ausgewählten Informationen dauerhaft dargestellt werden, während weniger häufig ausgewählte Informationen periodisch abwechselnd oder unterbrochen von anderen Informationen dargestellt werden. So kann der Tachometer immer angezeigt werden, egal, was die Bedienperson wünscht. Oder es ist denkbar, beispielsweise die Uhrzeit oder den Tankfüllstand periodisch wiederkehrend etwa alle 15 Minuten anzuzeigen. Dementsprechend ist weiter vorgesehen, daß auch die Anzeige insbesondere nach Wegfall des auslösenden Ereignisses wieder auf die ursprüngliche Darstellungsform zurückgeschaltet wird.

Insbesondere ist es aber auch vorgesehen, daß besonders wichtige Informationen dem Wunsch der Bedienperson übergeordnet werden und unabhängig von der getroffenen Auswahl bei Eintreten eines mit der Information verknüpften Ereignisses auf dem Bildschirm 1 dargestellt werden. So kann zum Beispiel beim Unterschreiten eines Grenzwertes die Tankfüllstandsanzeige aufleuchten, um dem Fahrer rechtzeitig Gelegenheit zu geben, aufgrund dieser Information zu tanken. Ähnliche auslösende Ereignisse können Grenzwerte der Temperatur oder des Drucks aber auch das Überschreiten einer zulässigen Geschwindigkeit sein. Eine entsprechende Priorität von solchen wichtigen Informationen ist ebenso fest voreinstellbar, aber auch dem Wunsch der Bedienperson gemäß nach Anbietung einer Auswahl von Prioritäten variierbar.

Weiter vorgesehen ist es, daß die Bedienperson eine Personenkennung über die Tastatur 10 eingibt, welche die gewonnenen Daten mit der Bedienperson verknüpft. Dadurch ist es insbesondere möglich, bei wechselnden Bedienpersonen, d.h. also bei wechselnden Fahrzeugbenutzern durch Eingabe der Personenkennung eine automatische Adaption der Anzeige auf dem Bildschirm 1 entsprechend den zuletzt von der sich identifizierenden Bedienperson erzeugten, im Speichermittel 16 gespeicherten Daten ohne eine erneute aufwendige Eingabeprozedur zu erhalten.

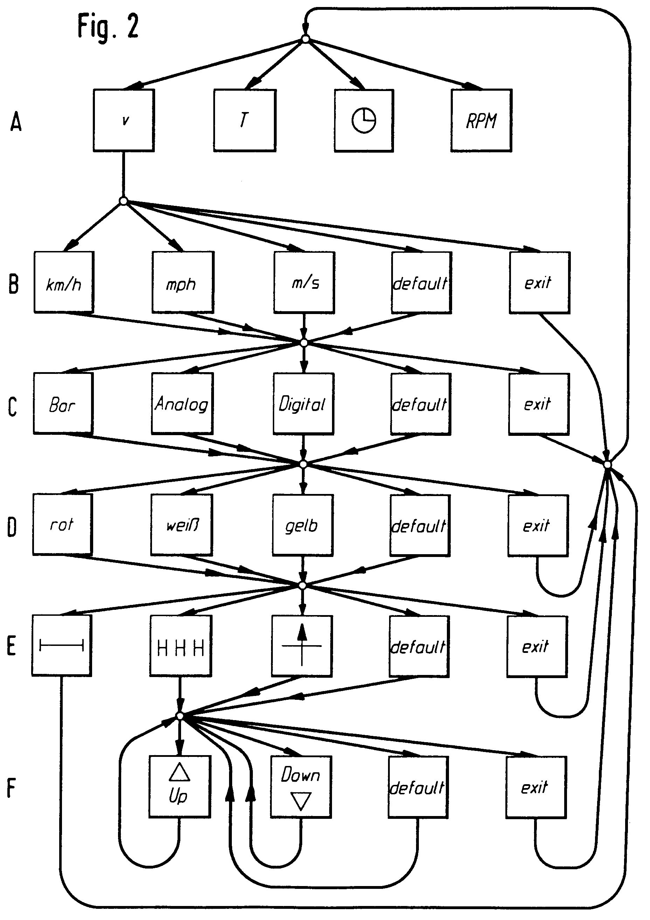

In Figur 2 ist ein Beispiel für ein Menü des Angebots 8 dargestellt. Das Menü weist in diesem Beispiel sechs Ebenen auf: Die Hauptebene A und die Unterebenen B, C, D, E, F. In der Hauptebene A werden der Bedienperson im Angebot 8 z.B. die vier Informationen Geschwindigkeit V, Temperatur T, Uhrzeit, Drehzahl RPM angeboten. Der Übersichtlichkeit halber wurden nur die Unterebenen für die Auswahl der Geschwindigkeit dargestellt. Nach Auswahl der Geschwindigkeit V über die Tastatur 10 wechselt das Angebot 8 und bietet nun die Auswahl verschiedener möglicher Einheiten Kilometer pro Stunde, Meilen pro Stunde, Meter pro Sekunde an. Zusätzlich ist ein Bedienfeld 9 DEFAULT und ein weiteres Bedienfeld 9 EXIT vorgesehen. Durch Anwahl des Bedienfeldes 9 EXIT gelangt die Bedienperson wieder zurück in das Hauptmenü. Durch Anwahl eines der anderen Bedienfelder 9 wird die gewünschte Meßeinheit oder, bei Anwahl des Bedienfeldes 9 DEFAULT eine im Anzeigerechner 14 fest abgespeicherte Meßeinheit verwendet. Identisch sind die weiteren Untermenüs aufgebaut. So folgt auf der Unterebene 10 die Auswahl der Darstellungsform, welche hier zwischen einer Bargraphanzeige, einer Analoganzeige oder einer Digitalanzeige wählbar ist. Die Unterebene D bietet der Bedienperson die Auswahl zwischen verschiedenen Farben der Anzeige an. Die Unterebene E bietet wahlweise eine kontinuierliche Anzeige, eine periodisch unterbrochene Anzeige oder eine grenzwertabhängige Anzeige an. Die letzte Unterebene F schließlich bietet durch die Bedienfelder 9 UP und DOWN die Möglichkeit, Anzeigeparameter, wie in diesem Fall die Zeitdauer der periodischen Unterbrechung oder die Höhe des eine Anzeige auslösenden Grenzwerts festzulegen. In ähnlicher Weise können Menüs für sämtliche das Fahrzeug betreffende Informationen im Angebot 8 dargestellt werden.

Durch diese Menüauswahl kann die Bedienperson eine persönliche, sehr genau auf die eigenen Wünsche abgestimmte Anzeige von Informationen auf dem Bildschirm 1 bewirken. Dazu ist es zwar möglich, jede noch so detaillierte die Anzeige betreffende Größe im Menü anzubieten, aber durch die Bedienfelder EXIT kann die Bedienperson jederzeit eine Unterbrechung des Auswahlverfahrens bewirken, wenn sie dieses wünscht. Da eine Abspeicherung des persönlichen Anzeigeprofils in Verbindung mit einer Personenkennung vorgesehen ist, ist die Bedienperson nicht gezwungen, bei jeder neuen Inbetriebnahme des Fahrzeugs bzw. der Anzeigevorrichtung die Eingabeprozedur zu wiederholen, sondern wird dann nach dem Starten über das Auswahlfeld 2 aufgefordert, die Personenkennung einzugeben.

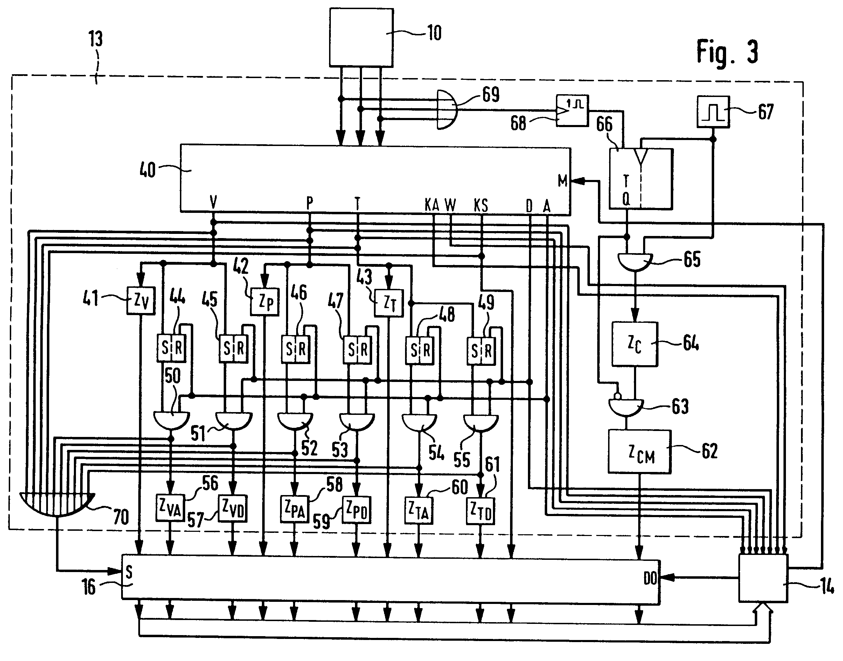

In Figur 3 ist ein Blockschaltbild der Auswerteeinheit 13 dargestellt. Die Ausgangssignale der Tastatur 10 werden über mehrere Ausgangsleitungen einem Decoder 40 und einem ersten ODER-Gatter 69 zugeführt. Der Decoder 40 weist einen ersten Ausgang V auf, der den Set-Eingängen eines ersten Flip-Flops 44 und eines zweiten Flip-Flops 45 und außerdem dem Takteingang eines ersten Zählers 41 zugeführt ist. Ein zweiter Ausgang P des Decoders 40 ist seinerseits an Set-Eingänge eines dritten Flip-Flops 46 und eines vierten Flip-Flops 47 sowie an den Takteingang eines zweiten Zählers 42 geführt. Der Decoder 40 weist einen dritten Ausgang T auf, der dem Takteingang eines dritten Zählers 43, sowie den Set-Eingängen eines fünften Flip-Flops 48 und eines sechsten Flip-Flops 49 zugeführt ist. Außerdem weist der Decoder 40 einen vierten Ausgang D auf, der mit den Reset-Eingängen des sechsten Flip-Flops 49, des vierten Flip-Flops 47 und des zweiten Flip-Flops 45 verbunden ist. Die Reset-Eingänge des ersten Flip-Flops 44, des dritten Flip-Flops 46 und des fünften Flip-Flops 48 sind mit einem fünften Ausgang A des Decoders 40 verbunden. Dem Takteingang eines vierten Zählers 56 ist ein erstes UND-Gatter 50 vorgeschaltet, dessen erster Eingang mit dem Q-Ausgang des ersten Flip-Flops 44 verbunden ist. In der gleichen Art und Weise ist ein fünfter Zähler 57 mit einem zweiten UND-Gatter 51 an dessen Takteingang am Q-Ausgang des zweiten Flip-Flops 45 angeordnet. Dies gilt auch für einen sechsten Zähler 58 und ein drittes UND-Gatter 52 am Q-Ausgang des dritten Flip-Flops 46, sowie für einen siebten Zähler 59 und ein viertes UND-Gatter 53 am Q-Ausgang des vierten Flip-Flops 47, einen achten Zähler 60 und ein fünftes UND-Gatter 54 am Q-Ausgang des fünften Flip-Flops 48 sowie schließlich einen neunten Zähler 61 mit einem sechsten UND-Gatter 55 am Q-Ausgang des sechsten Flip-Flops 49. Zusätzlich ist an den weiteren Eingang des ersten UND-Gatters 50, des dritten UND-Gatters 52 und des fünften UND-Gatters 54 der fünfte Ausgang A des Decoders 40 geführt. Ebenso ist der vierte Ausgang D des Decoders 40 mit jeweils einem zweiten Eingang des zweiten UND-Gatters 51, des vierten UND-Gatters 53 und des sechsten UND-Gatters 55 verbunden. Der Decoder 40 weist zudem einen sechsten Ausgang KS auf, der an einen Eingang des Speichermittels 16 geführt ist. Weitere Eingänge des Speichermittels 16 sind mit den Ausgängen sämtlicher Zähler 41, 42, 43, 56, 57, 58, 59, 60, 61 verbunden. Die Eingänge sämtlicher Zähler 41, 42, 43, 56, 57, 58, 59, 60, 61 sind mit Eingängen eines zweiten ODER-Gatters 70 verbunden, dessen Ausgang mit einem Speicher-Eingang S des Speichermittels 16 verbunden. Zusätzlich ist ein weiterer Eingang des zweiten ODER-Gatters 70 mit dem sechsten Ausgang KS verbunden. Zwischen dem T-Eingang eines T-Flip-Flops 66 und dem ersten ODER-Gatter 69 ist ein Monoflop 68 angeordnet. Der Q-Ausgang des T-Flip-Flops 66 ist zusammen mit dem Ausgang eines Taktgenerators 67 je einem Eingang eines siebten UND-Gatters 65 zugeführt. Der Taktausgang des Taktgenerators 67 liegt außerdem am Takteingang des T-Flip-Flops 66. Dem siebten UND-Gatter 65 ist der Takteingang eines zehnten Zählers 64 nachgeschaltet, dessen Ausgang an einem Eingang eines achten UND-Gatters 63 liegt. Der weitere Eingang des achten UND-Gatters 63 ist mit dem invertierten Q-Ausgang des T-Flip-Flops 66 verbunden. Dem Ausgang des achten UND-Gatters 63 folgt ein Mittelwertbildner 62. Auch der Ausgang des Mittelwertbildners 62 ist einem Eingang des Speichermittels 16 zugeführt. Der Decoder 40 weist zudem einen siebten Ausgang KA und einen achten Ausgang W auf, die direkt dem Anzeigerechner 14 zugeführt sind. Ein Ausgang des Anzeigerechners 14 ist mit einem Lese-Eingang DO des Speichermittels 16 verbunden. Sämtliche Ausgänge des Speichermittels 16 sind zum Anzeigerechner 14 geführt. Vom Anzeigerechner 14 verläuft eine Leitung zu einem Menüeingang M des Decoders 40. Der erste Ausgang V, der zweite Ausgang P, der dritte Ausgang T, der vierte Ausgang D und der fünfte Ausgang A sind außerdem Eingängen des Anzeigerechners 14 zugeführt.

Im Decoder 40 erfolgt eine Decodierung der Ausgangssignale der Tastatur 10 und die Zuordnung des Ergebnisses der Decodierung zu genau einem der Ausgänge V, P, T, KA, W, KS, D, A des Decoders 40. Dazu wird auch das am Menüeingang M anstehende Signal genutzt, welches dem Decoder 40 mitteilt, welche Auswahlmöglichkeiten das gerade dargestellte Angebot 8 überhaupt bietet. Unter Verwendung dieser Information ist eine eindeutige Zuordnung der Eingabe zu genau einem der Ausgänge V, P, T, KA, W, KS, D, A des Decoders 40 möglich. Die genannten Abkürzungen für die Ausgänge sollen ein Beispiel für eine Eingabemöglichkeit in eine solche Anzeigevorrichtung darstellen. Dabei bedeutet zunächst "V", daß per Tastatur 10 die Information der Geschwindigkeit ausgewählt wurde, "P", daß die Information des Luftdrucks und "T", daß die Information der Temperatur ausgewählt wurde. Zum Weiterschalten von Menüs im Auswahlbereich 2 des Bildschirms 1 (vgl. Figur 1) dient der Befehl "Weiterschalten", welcher hiermit "W" abgekürzt ist. Außerdem steht dem Benutzer die Möglichkeit offen, eine Personenkennung einzugeben und zusammen mit dieser Personenkennung die getroffene Auswahl bzw die zugehörigen Zählerstände der Zähler 41, 42, 43, 56, 57, 58, 59, 60, 61 und des Mittelwertbildners 62 als persönliche Daten im Speichermittel 16 abzuspeichern. Im umgekehrten Fall ist es möglich, sich durch diese Personenkennung zu identifizieren und dadurch bereits abgespeicherte Einstellungen zur Anzeige zu bringen. Die Zuordnung der Eingabe zum sechsten Ausgang KS bedeutet hierbei, daß die Bedienperson das Abspeichern einer Einstellung zusammen mit der Personenkennung wünscht, während ein Signal am siebten Ausgang KA das Auslesen der im Speichermittel 16 befindlichen Einstellungen und deren Weiterverarbeitung im Anzeigerechner 14 veranlassen soll. Des weiteren wurde für das Ausführungsbeispiel als Angebot für die Auswahl der Darstellungsformen die Möglichkeit angenommen, daß lediglich zwischen einer analogen und einer digitalen Darstellungsform ausgewählt werden kann. Dafür dienen bei der Anzeige der vierte Ausgang D und der fünfte Ausgang A , wobei "D" für digitale Anzeige und "A" für analoge Anzeige steht. Vom Anzeigerechner 14 gelangt die Information an den Decoder 40, welches Angebot 8 gerade auf dem Auswahlbereich 2 angezeigt wird. Durch Zuordnen der von der Tastatur 10 ankommenden Signale, die angeben, welche Taste gerade gedrückt wurde, zu der Information, was gerade angezeigt wurde, wird im Decoder 40 ermittelt, welcher Befehl durch die gerade ausgeübte Tastenbedienung ausgeführt werden soll.

Erkennt der Decoder 40 anhand der eingehenden Signale, welcher der auswählbaren Befehle ausgeführt werden soll, so bewirkt der Decodiervorgang ein Auftreten einer logischen Eins am entsprechenden Ausgang des Decoders 40. Die Auswahl einer bestimmten Information V, P, T bewirkt dabei ein Inkrementieren des zugehörigen Zählers 41, 42, 43, welcher damit durch seinen Zählerstand ein Maß für die Häufigkeit der Auswahl der zugehörigen Information darstellt. Je nachdem, welcher der Ausgänge V, P, T mit der logischen Eins beschaltet wurde, werden über die Set-Eingänge die entsprechenden Flip-Flops 44, 45, 46, 47, 48, 49 gesetzt, so daß an zwei der Q-Ausgänge eine logische Eins anliegt. Wird als nächstes die Auswahl einer Darstellungsform eingegeben, so bewirkt der jeweilige Ausgang D, A des Decoders 40 über eines der den Flip-Flops 44, 45, 46, 47, 48, 49 nachgeschalteten UND-Gatter 50, 51, 52, 53, 54, 55 ein Inkrementieren eines der Zähler 56, 57, 58, 59, 60, 61, so daß der jeweilige Zähler 56, 57, 58, 59, 60, 61 durch seinen Zählerstand ein Maß dafür angibt, wie häufig die gewählte Darstellungsform für die zugehörige Information bereits gewählt wurde. Die Zählerstände sämtlicher Zähler 41, 42, 43, 56, 57, 58, 59, 60, 61 liegen an Eingängen des Speichermittels 16, wo sie durch Auslösen eines Speichervorgangs abgespeichert werden. Der Speichervorgang wird durch eine logische Eins am Ausgang des zweiten ODER-Gatters 70 ausgelöst, die immer dann auftritt, wenn sich der Zählerstand eines Zählers 41, 42, 43, 56, 57, 58, 59, 60, 61 ändert oder der Befehl "KS" decodiert wurde.

Zudem wird bei jeder Tastenbedienung an der Tastatur 10 über das erste ODER-Gatter 69 das Monoflop 68 getriggert, woraufhin am Q-Ausgang des T-Flip-Flops 66 eine logische Eins erscheint. Durch die logische 1 am Q-Ausgang des T-Flip-Flops 66 wird das siebte UND-Gatter 65 durchlässig für die Takte des Taktgenerators 67. Daraufhin beginnt ein Zählvorgang im zehnten Zähler 64, der so lange andauert, bis er über ein Sperren des Ausgangs des siebten UND-Gatters 65 keine Impulse mehr erhält. Das Sperren des siebten UND-Gatters 65 erfolgt beim nächsten Tastendruck der Tastatur 10, da dieser ein erneutes Triggern des T-Flip-Flops 66 und damit ein Invertieren des logischen Zustandes des Q-Ausgangs bewirkt. Der Zählerstand ist somit ein Maß für die zwischen zwei Tastenbedienungen vergehende Zeit. Durch das Invertieren des Q-Ausgangs des T-Flip-Flops 66 wird gleichzeitig das achte UND-Gatter 63 durchlässig für den Ausgang des zehnten Zählers 64, woraufhin dessen Zählerstand zum Mittelwertbildner 62 gelangt. Im Mittelwertbilder 62 erfolgt eine Mittelung sämtlicher Zählerstände und somit sämtlicher gemessenen Zeitwerte, wenn mehrere Zeitmessungen zwischen mehreren Tastendrücken durchgeführt werden. Der hierbei errechnete Mittelwert ist somit ein ungefähres Maß für die Bediengeschwindigkeit bei der Bedienung der Tastatur 10. Dieser Mittelwert wird gleichfalls dem Speichermittel 16 zugeführt. Das Monoflop 68 dient lediglich dazu, daß der logische Zustand am Ausgang des ersten ODER-Gatters 69 so lange aufrecht erhalten wird, bis die das T-Flip-Flop 66 triggernde Taktflanke am Takteingang des T-Flip-Flops 66 anliegt. Die Zeitkonstante des Monoflops 68 wird daher nicht viel größer als die Periodendauer des Taktgenerators 67 gewählt werden. Um eine möglichst genaue Zeitmessung zu erhalten sollte die Taktfrequenz sehr groß gewählt werden. Es ist ebenso vorgesehen, daß die hier in Form einer Schaltung angegebenen Funktionen mittels eines Softwareprogramms in einem Rechner ausgeführt werden.

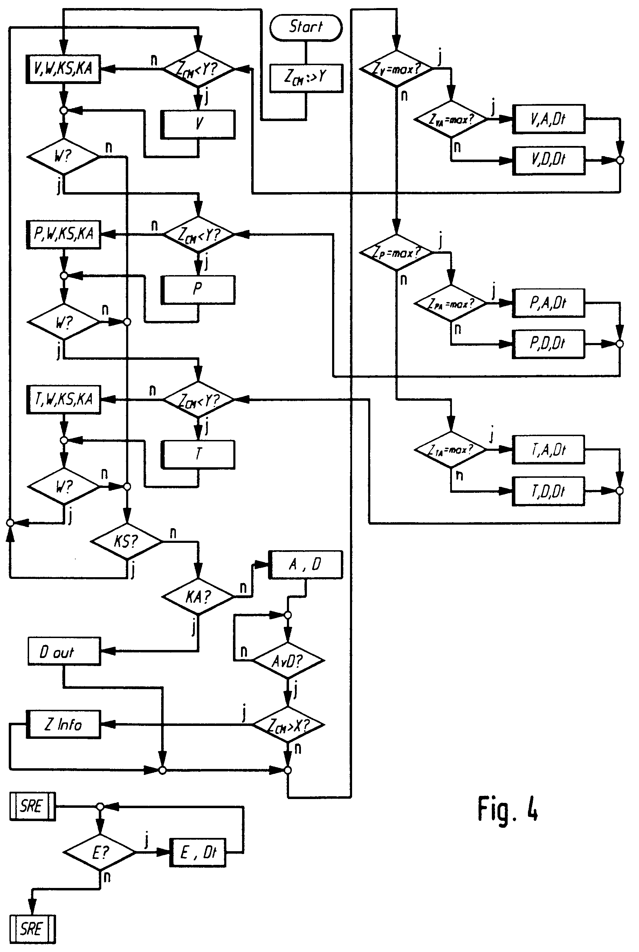

Die Funktion des anschließend folgenden Anzeigerechners 14 soll anhand der Figur 4 erläutert werden.

In Figur 4 ist ein Ablaufdiagramm gezeigt, das im Anzeigerechner 14 realisiert ist. Ausgehend vom Feld "Start" findet zunächst eine Initialisierung des Mittelwerts $Z_{CM}$ statt, indem er auf einen Wert gesetzt wird, welcher einen vorgegebenen Grenzwert Y überschreitet. Danach erfolgt eine Anzeige eines Angebots 8 (vgl. Figur 1) mit der Auswahlmöglichkeit zwischen Informationen die mit den Kürzeln V, W, KS, KA dargestellt sind. Sämtliche auf dem Bildschirm 1 anzuzeigenden Informationen oder Darstellungsformen wurden der leichten Erkennbarkeit halber in der Figur 4 mit einem dicken linken Symbolrand versehen. Dabei bedeutet die Auswahl des Bedienfeldes mit dem Buchstaben "V", daß die Bedienperson die Anzeige der Geschwindigkeit wünscht. Gibt er die Eingabe "W" als Auswahl an, so bedeutet dies, daß keine der angebotenen Informationen seinen Wünschen entspricht und er ein Weiterblättern auf eine weitere Menüseite wünscht. Die Eingabe des Befehls "KS" belegt, daß die Bedienperson soeben eine Personenkennung eingegeben hat, die sie zusammen mit den bisherigen Einstellungen abgespeichert haben möchte. Andererseits gibt der Befehl "KA" an, daß die Bedienperson anhand der gerade eingegebenen Personenkennung ein Auslesen von gespeicherten Einstellungen aus dem Speichermittel 16 und die Anzeige der diesen Einstellungen entsprechenden Informationen und Darstellungsformen am Bildschirm 1 wünscht.

Nach dieser Angebotsdarstellung auf dem Bildschirm 1 folgt eine Abfrage der Eingabe dergestalt, daß geprüft wird, ob eine Eingabe stattfindet, und wenn ja, ob diese Eingabe dem Befehl "W" entspricht, d.h. ob die Bedienperson weiterblättern möchte. Für den Fall der Eingabe "W" wird dann überprüft, ob der Mittelwert $Z_{CM}$ den Grenzwert Y unterschreitet, d.h. ob die Bedienperson eine geübte Bedienperson ist. Wird dies festgestellt, so erfolgt automatisch eine Vereinfachung der Anzeige des Angebots, dergestalt, daß nur noch neue Informationen, wie hier beispielsweise "P" für die Auswahl des Luftdrucks angezeigt werden. Die bereits bekannten Informationen "W", "KS","KA" werden unterdrückt, da davon auszugehen ist, daß die Bedienperson diese Informationen nicht mehr benötigt. Da die Bedienperson anhand des Befehls "W" bei der ersten Eingabe deutlich gemacht hat, daß sie keine Anzeige der Geschwindigkeit V wünscht, wird nun die Auswahl des Luftdruckes P als Information angeboten. Auch hier hat die Bedienperson wieder die Wahl, weiterzublättern (Eingabe "W") und dadurch die Information der Temperatur T angeboten zu bekommen, eine Personenkennung einzugeben, um Einstellungen abzuspeichern (Eingabe "KS") oder auszulesen (Eingabe "KA"), oder auch sich die Information über den Luftdruck P anzeigen zu lassen (Eingabe "P"). Gibt der Benutzer als Auswahl den Befehl "P" an, so wird die Abfrage nach der Eingabe "W" verneint. Daher verzweigt der Programmablauf weiter und gelangt zur Abfrage, ob ein Befehl "KS" eingegeben wurde. Für diesen Fall würde nun ein Speichervorgang erfolgen, der bereits in der Auswerteeinheit 13 vorgenommen würde, dem dann ein Rücksprung in eine Hauptschleife folgt. Die Hauptschleife wird gebildet, indem Abfragen nach der Eingabe "W" ein Weiterblättern durch alle Menüebenen bewirkt, bis von der letzten Menüebene wieder zur ersten Menüebene weitergeblättert wird, womit der Anfang der Hauptschleife wieder erreicht ist. Nach jeder bejahten Abfrage über den Befehl "W" erfolgt innerhalb dieser Hauptschleife eine Abfrage nach der Schnelligkeit der Bedienung ($Z_{CM}$ < Y ?), um festzustellen, ob die Anzeige für die geübte Bedienperson vereinfacht werden kann. Nach der Feststellung der Bedienererfahrung mittels dieser Abfrage und gegebenenfalls einer Vereinfachung der Anzeige erfolgt das Angebot von neuen Informationen zur Auswahl. Da die Bedienperson sich in diesem Beispiel für die Anzeige der Information "P" entschieden hat, wird die Abfrage nach der Information "KS" verneint und es erfolgt ein Sprung zur weiteren Abfrage, ob der Befehl "KA" eingegeben wurde. Auch diese Frage wird hier verneint, und es erfolgt eine Darstellung des Angebots der Darstellungsformen "A", "D" für den Luftdruck P, die zur Auswahl stehen. Es folgt ein weiterer Abfragevorgang, bei dem das Programm so lange wartet, bis eine Eingabe der Auswahl einer Darstellungsform erfolgt ist (A v D ?). Ist dies der Fall, so läuft das Programm weiter und gelangt zu der Abfrage, ob de Mittelwert $Z_{CM}$ einen vorgegebenen weiteren Grenzwert X überschreitet ($Z_{CM}$ > X ?). Dies ist dann der Fall, wenn die Bedienperson noch sehr ungeübt mit der Anzeigevorrichtung und dem Auswahlverfahren ist. Daher erfolgt programmgesteuert die Bereitstellung von Zusatzinformationen $Z_{Info}$, welche dann zusammen mit dem Angebot 8 abgebildet werden. Sollte hingegen bei der vorherigen Abfrage nach der Befehlseingabe "KA" die Befehlseingabe "KA" decodiert und damit erkannt worden sein, so wäre in diesem Fall mittels eines Signals über die Verbindung zwischen dem Anzeigerechner 14 und dem Lese-Eingang DO das Speichermittel 16 dazu veranlaßt worden, die abgespeicherten Einstellungen für die Informationen und deren Darstellungsformen an den Anzeigerechner 14 zu übermitteln (DOut). Somit liegen dann auf jeden Fall, ebenso wie bei einer manuellen Eingabe von Informationen und deren Darstellungsformen, Zählerstände und der Mittelwert $Z_{CM}$ vor, die nun für eine Anzeige von Informationen mit den zugehörigen Darstellungsformen genutzt werden sollen.

Das Programm gelangt im weiteren Ablauf zur Abfrage, ob der Zählerstand des ersten Zählers 41 größer ist als der des zweiten Zählers 42 oder des dritten Zählers 43 ($Z_V$ = max?). Da dies im hier genannten Beispiel nicht der Fall ist, verzweigt das Programm zur Abfrage, ob dies für den Zählerstand es zweiten Zählers 42 zutrifft ($Z_P$ = max?). Da hier angenommen wird, daß die Bedienperson den Luftdruck P ausgewählt hat, wird diese Frage hier bejaht und das Programm gelangt zur weiteren Abfrage, ob der Zählerstand des sechsten Zählers 58 größer ist als der Zählerstand des siebten Zählers 59 ($Z_{PA}$ = max?). Dies bedeutet im Klartext, ob eine digitale oder eine analoge Darstellungsform für die Daarstellung der Information des Luftdrucks P gewählt wurde. Für den Fall der Auswahl der analogen Darstellungsform überwiegt der Zählerstand des sechsten Zählers 68 gegenüber dem des siebten Zählers 59, wodurch dann eine Anzeige des Luftdrucks (P), in analoger Form (A), unter Verwendung der zugehörigen Daten aus den Sensoren 18 (Dt) erfolgt. Entsprechend erfolgt eine Anzeige der anderen Informationen V, T in analoger (A) oder digitaler (D) Darstellungsform unter Verwendung der zugehörigen Daten (Dt). Nach der Anzeige der zugehörigen Daten verzweigt das Programm wieder zur Hauptschleife, wobei hier berücksichtigt wird, daß die gewählte Information für den Bediener höchstwahrscheinlich auch die wichtigste Information darstellt. Deshalb wird die entsprechende Information im nun angezeigten Menü für das Angebot 8 entsprechend auf die oberste Ebene des Menüs gelegt, was bedeutet, daß Eingaben bezüglich dieser wichtigsten Information mit weniger Tastenbedienungen ausführbar sind. Die Verzweigung nach Darstellung der Information des Luftdrucks P führt daher in die Hauptschleife und zwar an die Stelle, wo die Abfrage der Bedienerschnelligkeit zur Festlegung der Angebotsdarstellung in ausführlicher oder in reduzierter Form stattfindet ($Z_{CM}$ < Y ?).

Zusätzlich ist eine Interrupt-Routine vorgesehen, die das Programm im idealen Falle parallel zum eben beschriebenen Programm ausführt, indem periodisch abgefragt wird, ob ein Ereignis E vorliegt, welches einer Anzeige bedarf. Dabei werden vor allem solche Ereignisse E berücksichtigt, die die Bedienperson in solch wichtigem Maße betreffen, daß sie die Wichtigkeit der von ihr getroffenen Einstellungen übersteigen. Tritt ein solches Ereignis E ein, so wird dieses Ereignis E mit den zugehörigen Daten sofort angezeigt (E, Dt). Fällt das Ereignis E wieder weg, so wird wieder die vorherige von der Bedienperson getroffene Einstellung berücksichtigt und die Anzeige auf dem Bildschirm 1 entsprechen der von ihm gewünschten Art ausgeführt.

## Patentansprüche

1.  Verfahren zur Anzeige von Informationen auf einem Bildschirm einer Anzeigevorrichtung in einem Kraftfahrzeug, wobei die anzuzeigenden Informationen und die Darstellungsformen der anzuzeigenden Informationen von einer Bedienperson mittels Betätigung von Bedientasten aus einem auf dem Bildschirm dargestellten Angebot von Informationen und Darstellungsformen ausgewählt werden, dadurch gekennzeichnet, daß die von der Bedienperson (11) getroffene Auswahl der Informationen (4, 5, 6, 7) und/oder der Darstellungsformen bezüglich ihrer Häufigkeitsverteilung und/oder der zeitliche Abstand zwischen wenigstens zwei Bedienungen der Bedientasten (9) als Maß für die Bediengeschwindigkeit festgestellt und ausgewertet wird und daß danach die Darstellung des auf dem Bildschirm (1) dargestellten Angebots (8) und/oder der auf dem Bildschirm (1) angezeigten Informationen (4, 5, 6, 7) und/oder ihrer Darstellungsformen in Abhängigkeit von der Auswertung vorgenommen wird.

2.  Verfahren nach Anspruch 1, dadurch gekennzeichnet, daß das Angebot (8) in Form von Symbolen oder Buchstaben oder Zahlen dargestellt wird.

3.  Verfahren nach Anspruch 2, dadurch gekennzeichnet, daß das Angebot (8) dergestalt geändert wird, daß bei einer niedrigen festgestellten Bediengeschwindigkeit Zusatzinformationen auf dem Bildschirm (1) als Bedienungshilfen für die Auswahl dargestellt werden.

4.  Verfahren nach Anspruch 2, dadurch gekennzeichnet, daß das Angebot (8) dergestalt geändert wird, daß bei einer hohen festgestellten Bediengeschwindigkeit keine oder nur eine vereinfachte Darstellung des Angebots (8) auf dem Bildschirm (1) erfolgt.

5.  Verfahren nach einem der Ansprüche 1 bis 4, dadurch gekennzeichnet, daß das Angebot (8) dergestalt geändert wird, daß die Informationen (4, 5, 6, 7) oder Darstellungsformen, die mit einer hohen Häufigkeit ausgewählt werden, so angeboten werden, daß weniger Betätigungen der Bedientasten (9) zu ihrer Auswahl erforderlich sind, als für die Auswahl vergleichsweise seltener ausgewählter Informationen (4, 5, 6, 7) oder Darstellungsformen.

6. Verfahren nach einem der Ansprüche 1 bis 5, dadurch gekennzeichnet, daß das Angebot in Form eines Menüs erfolgt, welches wenigstens eine Hauptebene und wenigstens eine Unterebene aufweist, und daß das Menü nach wenigstens einer Betätigung wenigstens einer der Bedientasten (9) von der Hauptebene in die Unterebene verzweigt.

7. Verfahren nach Anspruch 6, dadurch gekennzeichnet, daß bei einer hohen festgestellten Häufigkeit einer bestimmten durch Betätigung wenigstens einer der Bedientasten (9) ausgewählten Information (4, 5, 6, 7) die bestimmte ausgewählte Information (4, 5, 6, 7) zur Auswahl bevorzugt in der Hauptebene angeboten wird.

8. Verfahren nach einem der Ansprüche 1 bis 7, dadurch gekennzeichnet, daß unabhängig von den ausgewählten Informationen (4, 5, 6, 7) und deren Darstellungsformen bestimmte, wichtige Informationen immer, oder immer wieder in periodischen Zeitabständen oder unmittelbar bei Auftreten eines mit diesen wichtigen Informationen in Zusammenhang stehenden Ereignisses auf dem Bildschirm (1) angezeigt werden.

9. Verfahren nach Anspruch 8, dadurch gekennzeichnet, daß nach einer bestimmten Zeitspanne oder nach Wegfall des mit den wichtigen Informationen in Zusammenhang stehenden Ereignisses von den wichtigen Informationen wieder auf eine Anzeige anderer Informationen umgeschaltet wird.

10. Verfahren nach einem der Ansprüche 1 bis 9, dadurch gekennzeichnet, daß die Änderungen der auf dem Bildschirm (1) anzuzeigenden Darstellungsformen und Informationen (4, 5, 6, 7), welche durch die Auswertung vorgenommen werden, in einem Speichermittel (16) gespeichert werden, und daß zu einem beliebigen späteren Zeitpunkt das Angebot (8) oder die anzuzeigenden Informationen (4, 5, 6, 7) oder deren Darstellungsformen anhand der abgespeicherten Änderungen verändert werden können.

11. Verfahren nach Anspruch 10, dadurch gekennzeichnet, daß die Änderungen im Speichermittel (16) zusammen mit einer Personenkennung abgespeichert werden, die die Bedienperson (11), welche die Änderungen bewirkt hat, identifiziert.

**Claims**

1. Method for displaying information on a screen of a display device in a motor vehicle, in which the information to be displayed and the forms of representation of the information to be displayed are selected by an operating person from a range of options of information and forms of representation represented on the screen by the actuation of command keys, characterized in that the selection of the information (4, 5, 6, 7) and/or the forms of representation made by the operating person (11) is determined and evaluated with respect to its frequency distribution and/or the time interval between at least two actuations of the command keys (9) as a measure of the operating speed, and in that following this the representation of the range of options (8) represented on the screen (1) and/or of the information (4, 5, 6, 7) and/or its forms of representation displayed on the screen (1) is performed depending on the evaluation.

2. Method according to Claim 1, characterized in that the range of options (8) is represented in the form of symbols or letters or numbers.

3. Method according to Claim 2, characterized in that the range of options (8) is changed in such a way that if a low operating speed is determined, additional information is represented on the screen (1) as operating aids for the selection.

4. Method according to Claim 2, characterized in that the range of options (8) is changed in such a way that if a high operating speed is determined, representation or only a simplified representation of the range of options (8) is made on the screen (1).

5. Method according to one of Claims 1 to 4, characterized in that the range of options (8) is changed in such a way that the information (4, 5, 6, 7) or forms of representation that are selected with a high frequency are offered in such a way that fewer actuations of the command keys (9) are required for their selection than for the selection of information (4, 5, 6, 7) or forms of representation selected comparatively less often.

6. Method according to one of Claims 1 to 5, characterized in that the range of options is offered in the form of a menu which has at least one main level and at least one subsidiary level, and in that after at least one actuation of at least one of the command keys (9) the menu branches from the main level into the subsidiary level.

7. Method according to Claim 6, characterized in that if a high frequency of a particular item of information (4, 5, 6, 7) selected by actuating at least one of the command keys (9) is determined, the particular item of information (4, 5, 6, 7) selected is preferentially offered for selection on the main level.

8. Method according to one of Claims 1 to 7, characterized in that, irrespective of the selected information (4, 5, 6, 7) and its forms of representation, specific important information is always displayed on the screen (1), or is displayed repeatedly at periodic intervals or immediately an event associated with said important information occurs.

9. Method according to Claim 8, characterized in that after a specific time period, or after the disappearance of the event associated with the important information, a switch is made from the important information to displaying other information again.

10. Method according to one of Claims 1 to 9, characterized in that the changes to the forms of representation and information (4, 5, 6, 7) to be displayed on the screen (1), which were made as a result of the evaluation, are stored in a memory means (16), and in that at an arbitrary later time the range of options (8) or the information (4, 5, 6, 7) to be displayed or its forms of representation can be changed on the basis of the stored changes.

11. Method according to Claim 10, characterized in that the changes in the memory means (16) are stored together with a personal identifier that identifies the operating person (11) who made the changes.

**Revendications**

1. Procédé d'affichage d'informations sur un écran à images d'un dispositif d'affichage dans un véhicule automobile,
les informations destinées à l'affichage et les formes de représentation des informations d'affichage étant sélectionnées par du personnel de service par actionnement de touches d'une offre d'informations et de formes de représentation affichées sur l'écran à images, caractérisé en ce que

- la sélection des informations (4, 5, 6, 7) et/ou des formes représentatives choisies par du personnel de service (11) pour la distribution de la fréquence et/ou la distance dans le temps entre au moins deux actionnements des touches de service (9) est prise et exploitée comme mesure de la vitesse d'actionnement, et
- la représentation de l'offre (8) représentée sur l'écran à images (1) et/ou des informations (4, 5, 6, 7) affichées sur l'écran à images (1) et/ou ses formes de représentation se font en fonction de cette exploitation.

2. Procédé selon la revendication 1,
caractérisé en ce que
l'offre (8) est représentée sous la forme de symboles de lettres ou de chiffres.

3. Procédé selon la revendication 2,
caractérisé en ce que
l'offre (8) est modifiée pour que dans le cas d'une vitesse d'actionnement plus faible, constatée, des informations supplémentaires apparaissent sur l'écran à images (1) comme aide à la commande.

4. Procédé selon la revendication 2,
caractérisé en ce que
l'offre (8) est modifiée de façon qu'en cas de détection d'une vitesse de commande élevée, l'offre (8) n'apparaisse pas sur l'écran à images (1) ou n'apparaisse que sous une représentation simplifiée.

5. Procédé selon l'une des revendications 1 à 4,
caractérisé en ce que
l'offre (8) est modifiée pour que les informations (4, 5, 6, 7) ou les formes représentatives sélectionnées avec une fréquence d'apparition élevée, soient offertes pour demander moins de manoeuvre des touches de service (9) pour leur sélection que les informations (4, 5, 6, 7) ou les formes représentatives sélectionnées comparativement moins fréquemment pour la sélection.

6. Procédé selon l'une des revendications 1 à 5,
caractérisé en ce que

- l'offre se fait sous la forme d'un menu ayant au moins un plan principal et au moins un plan auxiliaire, et
- après au moins un actionnement d'au moins l'une des touches de service (9), le menu passe par des embranchements dans les plans auxiliaires à partir du plan principal.

7. Procédé selon la revendication 6,
caractérisé en ce que
lorsqu'on constate une fréquence élevée d'une information (4, 5, 6, 7) déterminée, choisie par l'actionnement d'au moins l'une des touches de service (9), les informations définies, choisies (4, 5, 6, 7) sont offertes à la sélection de préférence dans le plan principal.

8. Procédé selon l'une des revendications 1 à 7,
caractérisé en ce qu'
indépendamment des informations sélectionnées (4, 5, 6, 7) et de leur forme représentative, certaines informations importantes sont toujours affichées ou le sont toujours à des intervalles périodiques ou directement après l'apparition de l'une des informations importantes en relation avec des événements sur l'écran à images (1).

9. Procédé selon la revendication 8,
caractérisé en ce qu'
après au moins un intervalle de temps déterminé ou après la disparition de l'événement des informations importantes, liés aux informations importantes, on commute de nouveau sur l'affichage d'autres informations.

10. Procédé selon l'une des revendications 1 à 9,
caractérisé en ce que

- les variations des informations affichées sur l'écran d'affichage (1) et des informations (4, 5, 6, 7) réalisées par l'exploitation, sont enregistrées dans une mémoire (16), et
- à n'importe quel instant ultérieur, l'offre (8) ou les informations (4, 5, 6, 7) à afficher ou leur forme représentative peuvent être modifiées à l'aide de modifications mises en mémoire.

11. Procédé selon la revendication 10,
caractérisé en ce que
les modifications sont enregistrées dans la mémoire (16) avec une reconnaissance de personnes qui identifie l'agent de service (11) qui a effectué les modifications.

Fig. 1

# Fig. 2

Fig. 3

Fig. 4